# EUROPÄISCHE PATENTSCHRIFT

(11) **EP 3 634 709 B1**
(45) Veröffentlichungstag und Bekanntmachung des Hinweises auf die Patenterteilung: **14.10.2026**
(21) Anmeldenummer: 18725820.7
(22) Anmeldetag: 17.05.2018
(51) Int. Cl.: B29C 44/14, B29C 37/00, B29K 75/00

(54) **POLYURETHAN-FORMTEIL MIT INTEGRIERTER MONTAGEHILFE, VERFAHREN ZU DESSEN HERSTELLUNG SOWIE VERFAHREN ZU DESSEN MONTAGE**
POLYURETHANE MOLDED PART HAVING AN INTEGRATED MOUNTING AID, METHOD FOR PRODUCING SAME, AND METHOD FOR MOUNTING SAME
PIÈCE MOULÉE EN POLYURÉTHANE PRÉSENTANT UN AUXILIAIRE DE MONTAGE INTÉGRÉ, PROCÉDÉ POUR SA FABRICATION AINSI QUE PROCÉDÉ POUR SON MONTAGE

(30) Priorität: 08.06.2017 DE 102017112596
(43) Veröffentlichungstag der Anmeldung: 15.04.2020
(73) Patentinhaber: Carcoustics TechConsult GmbH, 51381 Leverkusen (DE)
(72) Erfinder: LAMMERT, Thomas, 51491 Overath (DE); SCHÖNZART, Paul, 51381 Leverkusen (DE)
(74) Vertreter: Patentanwälte Bauer Vorberg Kayser
(86) Internationale Anmeldenummer: PCT/EP2018/062856
(87) Internationale Veröffentlichungsnummer: WO 2018/224276

(56) Entgegenhaltungen:
- WO-A1-97/49082
- DD-A3- 135 328
- DE-A1- 10 160 374
- DE-A1- 3 408 975
- DE-A1- 3 642 444
- DE-B3- 102007 021 806
- DE-C2- 3 408 975
- DE-C2- 3 725 436

## Beschreibung

### Technisches Gebiet

Die vorliegende Erfindung betrifft ein Polyurethan-Formteil mit integrierter Montagehilfe, insbesondere zum Einbau in Karosserie-Zwischenräume eines Kraftfahrzeugs. Ferner betrifft die vorliegende Erfindung ein Verfahren zur Herstellung des erfindungsgemäßen Polyurethan-Formteils als auch ein Verfahren zum Einbauen des erfindungsgemäßen Polyurethan-Formteils in einen Karosserie-Zwischenraum eines Kraftfahrzeugs.

### Technischer Hintergrund

Polyurethan-Formteile sind aus dem Stand der Technik bekannt. Insbesondere formgeschäumte Polyurethan-Bauteile haben sich aufgrund ihrer vorteilhaften akustischen und thermischen Eigenschaften bei einer Verwendung im Fahrzeugbau bewährt. Allerdings weisen Polyurethan-Formteile in der Regel eine stumpfe Oberfläche auf. Aufgrund dieser stumpfen Oberfläche ist eine Montage, insbesondere in Karosserie-Hohl- oder Zwischenräume, nur unter Zuhilfenahme einer Gleithilfe möglich. Bei den heutigen aus dem Stand der Technik bekannten Systemen wird als Gleithilfe oftmals eine reibungsmindernde Folie eingesetzt.

Die Herstellung derartiger Polyurethan-Formteile ist jedoch mit relativ hohen Kosten verbunden. Die reibungsmindernde Folie muss üblicherweise (händisch) in ein Formwerkzeug eingelegt und mittels Vakuum tiefgezogen werden. Dieser Arbeitsschritt ist technisch sehr aufwendig, denn die Folie weist in der Regel eine Schichtdicke von 50 µm und darunter auf. Dies führt oftmals dazu, dass diese bei der Verarbeitung beschädigt wird, beispielsweise reißt, so dass der gesamte Tiefziehvorgang wiederholt werden muss. Da sich technisch bedingt nur ganze Formwerkzeughälften mit Folie beschichten lassen, wird bei derartigen Prozessen zudem viel reibungsmindernde Folie verschwendet.

In der Praxis haben sich weiterhin unzureichende Haftungswerte der Folie am Formteil als problematisch erwiesen, die zu einem stellenweisen Ablösen der Folie von dem Polyurethan-Formteil führen können, was eine dann zeitintensive Nacharbeitung erfordert. Darüber hinaus lassen sich Folienbeschichtungen von Polyurethan-Formteilen mit komplexen Geometrien gar nicht erst realisieren.

Aus der DE 10 2007 021 806 A1 ist ein Verfahren zum Einbringen eines Schaumstoffkörpers aus elastisch nachgiebigem Material in einen zumindest eine Einbringöffnung aufweisenden Hohlraum bekannt, wobei der Schaumstoffkörper ein Übermaß gegenüber dem Querschnitt des Hohlraumes aufweist.

Zum Einbringen des Schaumstoffkörpers in den Hohlraum wird der Schaumstoffkörper mechanisch auf ein gegenüber dem Querschnitt des Hohlraumes verringertes Untermaß komprimiert und mittels eines Halteteils im komprimierten Zustand gehalten, anschließend im komprimierten Zustand in den Hohl-raum eingeführt und dort als komprimierter Schaumstoffkörper in seiner späteren Lage innerhalb des Hohlraumes vorläufig mechanisch gesichert. Anschließend wird die Kompression des Schaumstoffkörpers aufgehoben, wodurch sich der Schaumstoffkörper innenseitig unter Vorspannung an den Hohlraum anlegt.

Es ist insbesondere vorgesehen, dass vor oder gleichzeitig mit dem Einführen des komprimierten Schaumstoffkörpers eine Lösevorrichtung in den Hohlraum eingeführt wird. Nach dem Einbringen des komprimierten Schaumstoffkörpers wird dieser vorläufig mechanisch gesichert. Daraufhin wird die Lösevorrichtung über die Länge des komprimierten Schaumstoffkörpers aus dem Hohlraum her-ausgezogen wird, derart, dass das Halteteil mit fortschreitendem Herausziehen der Lösevorrichtung nach und nach gelöst wird, wodurch die Kompression des Schaumstoffkörpers der Länge nach aufgehoben und sich dieser innenseitig unter Vorspannung an den Hohlraum anlegt.

Ähnliches lehrt die WO97/49082 A2. Aus diesem Dokument aus dem Stand der Technik ist ein Schaumstoffelement zur Schalldämmung von Hohlräumen bekannt, insbesondere von Leichtmetall-Strangpressprofilen, wie sie im Schienenfahrzeugbau verwendet werden. Das Schaumstoffelement umfasst eine Schicht aus einem Polyurethan-Weichschaum und eine Schicht aus einem Polyurethan-Flockenverbundschaum. Zum Einbringen eines derartigen Schaumstoffelements in einen Hohlraum wird dieses vor dem Einbringen in einen zu bedämpfenden Hohlraum derart komprimiert in eine luftdichte Folie eingeschweißt, dass es durch eine Öffnung des Hohlraums in diesen eingeschoben werden kann. Nach dem Einbringen und Platzieren des Schaumstoffelements wird die Folie geöffnet, wodurch unter Luftzufuhr das Schaumstoffelement derart expandiert, dass die Schicht aus Polyurethan-Weichschaum durch die Schicht aus einem Polyurethan-Flockenverbundschaum druckbeaufschlagt im Wesentlichen flächig an den Wänden des Hohlraums anliegt.

In der DE 34 08 975 A1 wird ein Verfahren zur Herstellung eines aus Polyurethan-Schaumstoff mit eingelagertem Hohlprofil aus Metall bestehenden Profilteils beschrieben. Dabei wird der Formhohlraum eines mehrteiligen Formkastens auslackiert, und das Hohlprofil wird in den Formhohlraum eingelegt Sodann wird der Formkasten geschlossen, während sich der Lack noch in flüssigem bzw. teigigem Zustand befindet, damit sich im Bereich der Trennfuge eine spaltenfreie Verbindung zwischen den Lackschichten ergibt, woraufhin in den Formhohlraum ein Polyurethan-Schaumstoff eingespritzt wird.

### Zusammenfassung der Erfindung

Der Erfindung liegt somit die Aufgabe zu Grunde ein gegenüber dem Stand der Technik verbessertes Polyurethan-Formteil bereitzustellen, insbesondere ein formgeschäumtes Polyurethan-Formteil. Weiterhin soll ein Polyurethan-Formteil bereitgestellt werden, das bei gleichen oder vorzugsweise verbesserten Montageeigenschaften einfacher in seiner Herstellung ist und zudem eine Verringerung der Herstellungskosten ermöglicht. Ferner soll ein solches Polyurethan-Formteil weitere für die Montage zweckdienliche Eigenschaften aufweisen.

Gelöst wird diese Aufgabe durch ein Polyurethan-Formteil mit den Merkmalen des Patentanspruchs 1.

Vorteilhafte Ausgestaltungen und Varianten der Erfindung ergeben sich aus den weiteren unabhängigen Ansprüchen, den auf die unabhängigen Ansprüche rückbezogenen abhängigen Ansprüchen sowie der nachfolgenden Beschreibung.

Überraschenderweise hat sich gezeigt, dass ein erfindungsgemäßes Polyurethan-Formteil mit integrierter Montagehilfe die Aufgabe hervorragend löst. Ein solches Formteil ist insbesondere zum Einbau in Karosserie-Hohl- bzw. Zwischenräume eines Kraftfahrzeugs geeignet. Dies gilt insbesondere dann, wenn es sich um ein formgeschäumtes Polyurethan-Formteil handelt.

Ein erfindungsgemäßes Polyurethan-Formteil weist zumindest in einem Teilbereich eine mit dem Polyurethan-Formteil stoffschlüssig verbundene Lack-basierte Beschichtung auf, die einen reibungsmindernden Oberflächenbereich ausbildet. Diese Beschichtung verhindert einen direkten Kontakt der Oberfläche des Polyurethans des Formteils mit der Oberfläche des Hohlraums, in den es eingesetzt werden soll, der z.B. in einer Kfz-Karosserie ausgebildet ist.

In einer vorteilhaften Weiterbildung weist das erfindungsgemäße Polyurethan-Formteil nur an sog. "Kontaktstellen" eine Lack-basierte Beschichtung auf und nicht wie bei den folienbeschichteten Formteilen im Stand der Technik auf der gesamten Oberfläche des Formteils, welche von zumindest einer Werkzeughälfte ausgebildet wird. Bei diesen Kontaktstellen kann es sich insbesondere um diejenigen Oberflächenbereiche des Formteils handeln, welche beim Einsetzen des Formteils in einen Hohlraum mit den Wänden im Zugang zum Hohlraum in einen mechanischen Kontakt kommen. In Abhängigkeit von der Geometrie des Formteils bzw. des auszufüllenden Hohlraums kann es sich auch um eine einzige Kontaktstelle handeln. Dadurch, dass nur die Kontaktstelle(n) des Formteils mit der Lack-basierten Beschichtung versehen wird/werden, kann die einzusetzende Lackmenge zur Ausbildung der Lack-basierten Beschichtung minimiert werden. Hierdurch ergeben sich Kosten- und Umweltvorteile, insbesondere im direkten Vergleich zu den vorstehend diskutierten Folienbeschichteten Formteilen gemäß Stand der Technik.

Bei der Lack-basierten Beschichtung handelt es sich vorzugsweise um eine Beschichtung basierend auf einer wässrigen Suspension von Festschmierstoffen, die in einem organischen oder anorganischen Binder eingelagert sind. Vorzugsweise auf Basis Polyurethan bei klassischem In-Mould Coating, können aber auch z.B. nachträglich aufgebrachte Lacke/ Polymere oder auch Beflockungen sein.

Je nach Einsatzzweck kann die Lack-basierte Beschichtung selbst den reibungsmindernden Oberflächenbereich ausbilden, vorzugsweise indem eine Lack-basierte Zusammensetzung mit niedrigen Reibungskoeffizienten verwendet wird.

Die Lack-basierte Beschichtung kann beispielsweise in Form von einzelnen Punkten, Noppen oder Streifen und/oder flächig-angeordneten Punkten, Noppen oder Streifen oder anderen Strukturen ausgebildet sein.

In einer weiteren bevorzugten Ausführungsform ist die Lack-basierte Beschichtung durchgehend flächig ausgebildet.

Der reibungsmindernde Oberflächenbereich, d.h. der Bereich der Oberfläche des Formteils, der mit der Lack-basierten Beschichtung versehen ist, ist vorzugsweise eben oder mehr bevorzugt strukturiert ausgebildet. Mittels einer strukturierten Oberfläche kann die Kontaktfläche zwischen Formteil und Hohlraum reduziert werden, so dass das Einführen des Formteils in den Hohlraum vereinfacht wird.

In einer weiteren vorteilhaften Weiterbildung wird der reibungsmindernde Oberflächenbereich durch eine separat ausgebildete reibungsmindernde Schicht gebildet, die mit der Lack-basierten Beschichtung verbunden ist. Dabei kann entweder die Lack-basierte Beschichtung oder die reibungsmindernde Schicht mit einer Klebstoffformulierung versehen, insbesondere beschichtet, sein, um eine stoffschlüssige Verbindung zwischen der Lack-basierten Beschichtung und der reibungsmindernden Schicht herzustellen.

Vorzugsweise besteht die reibungsmindernde Schicht aus einem Vlies oder einem Filz. Besonders bevorzugt umfassen Vlies oder Filz Kunststofffasern, beispielsweise Kunststofffasern aus PP.

Gemäß einer weiteren bevorzugten Ausführungsform besteht die reibungsmindernde Schicht aus einer Faserbeflockung, die auf ein fertig ausgeformtes Bauteil aufgebracht wird. Besonders bevorzugt umfasst die Faserbeflockung Kunststofffasern, beispielsweise Kunststofffasern aus PP.

Gemäß einer weiteren bevorzugten Ausführungsform besteht die reibungsmindernde Schicht aus einer schaumartigen Element, das bezogen auf das Polyurethan-Formteil und/oder die Lack-basierte Beschichtung eine geringere Kompressionshärte aufweist.

Bevorzugt bedeckt die Lack-basierte Beschichtung maximal 50 %, besonders bevorzugt maximal 30 % der gesamten Oberfläche des Polyurethan-Formteils.

Gemäß einer weiteren bevorzugten Ausführungsvariante weist die Lack-basierte Beschichtung weiterhin einen reibungserhöhten Oberflächenbereich auf. Ein solcher, reibungserhöhter Oberflächenbereich kann beispielsweise ausgebildet werden, indem die lokale Oberflächengeometrie des Formteils geeignet gewählt wird, z.B. indem Rippenstrukturen in der Oberfläche ausgebildet werden, die sich insbesondere quer zu einer vorgesehenen Einschubrichtung des Formteils erstrecken, oder indem lokal auf die Oberfläche des Formteils eine zweite Lack-basierte Beschichtung aufgebracht wird, die insbesondere die erster Lack-basierte Beschichtung abdecken kann. Dabei weist der für die zweite Lack-basierte Beschichtung verwendete Lack einen gegenüber dem Lack der ersten Lack-basierten Beschichtung erhöhten Reibungskoeffizienten aufweist.

Das erfindungsgemäße Polyurethan-Formteil weist somit zwei unterschiedliche Funktionen auf, die sich sowohl bei als auch nach der Montage als besonders vorteilhaft erweisen. Neben der Funktion der reibungsmindernden Beschichtung als Montagehilfe gewährleistet der reibungserhöhte Oberflächenbereich eine dauerhafte Fixierung des Bauteils in seiner bestimmungsgemäßen Lage nach dem Einsetzen in den Hohlraum.

Vorzugsweise ist das Polyurethan-Formteil gemäß dieser bevorzugten Ausführungsvariante so ausgebildet, dass der reibungserhöhte Oberflächenbereich erst dann seiner Funktion zur Lagefixierung nachkommt, wenn das Formteil seine bestimmungsgemäße endgültige Position im Hohlraum eingenommen hat. Hierzu kann z.B. der reibungserhöhte Oberflächenbereich in solchen Oberflächenabschnitten des Formteils angeordnet sein, der erst in der Einbaulage des Formteils im Hohlraum zur Anlage an der Innenwandung des Hohlraums kommt, während des Einführens in den Hohlraum hingegen keinen mechanischen Kontakt mit der Innenwandung des Zugangs zum Hohlraum hat.

Gemäß einer weiteren bevorzugten Ausführungsvariante weist die Lack-basierte Beschichtung Mittel zur Lagekennzeichnung auf. Mit Hilfe der Mittel zur Lagekennzeichnung wird die Montage des Polyurethan-Formteils stark vereinfacht, da anhand der Kennzeichnung z.B. die genaue Einführrichtung des Formteils, beispielsweise dem Werker, eindeutig aufgezeigt werden kann. Eine derartige Kennzeichnung kann zudem, beispielsweise bei einer automatisierten Montage mit Hilfe eines Montageroboters, als Orientierungspunkt z.B. bei einer automatisierten Lageerkennung dienen und den Montageprozess vereinfachen.

Vorzugsweise dienen als Mittel zur Lagekennzeichnung Farbpigmente, mit denen die Lack-basierte Beschichtung entsprechend eingefärbt werden kann. Vorteilhaft ist die Farbgebung derart, dass unter normalen Beleuchtungsbedingungen ein farblicher Kontrast oder Helligkeitskontrast zwischen dem Polyurethan-Formteil und der Lack-basierten Beschichtung entsteht. In einer anderen bevorzugten Ausführungsvariante können auch fluoreszierende Farbpigmente verwendet werden.

Erfindungsgemäß weist die Lack-basierte Beschichtung eine Schichtdicke im Bereich von 30 bis 150 µm auf vorzugsweise zwischen 30 und 50 µm In einer anderen bevorzugten Ausführungsvariante kann die Lack-basierte Beschichtung in ihrem Querschnitt variierend dick ausgeführt sein, beispielsweise in Form einer sich in Längsrichtung erstreckenden Gleitkante, und am höchsten Punkt eine Schichtdicke von 150 µm aufweisen.

Gemäß einem weiteren Aspekt betrifft die vorliegende Erfindung ein Verfahren zur Herstellung des erfindungsgemäßen Polyurethan-Formteils, wobei zunächst eine Zusammensetzung zur Ausbildung der Lack-basierten Beschichtung auf zumindest einem Teilbereich einer offenen Kavität eines Formwerkzeugs aufgebracht wird und anschließend die Kavität des Formwerkzeugs mit Polyurethan hinterschäumt wird.

Hierzu kann beispielsweise eine Reaktionsmischung aus Polyol und Isocyanat und ggf. Wasser zur Ausbildung des geschäumten Polyurethans in die Kavität eingebracht und diese zur Ausbildung des Formteils geschlossen

Gemäß einer bevorzugten Ausführungsvariante wird vor dem Schritt des Aufbringens der Zusammensetzung zur Ausbildung der Lack-basierten Beschichtung ein Trennmittel in die offene Kavität ein- und auf die Oberflächen des Formwerkzeugs aufgebracht, um ein Anhaften der Beschichtung sowie des Formteils zu verhindern, insbesondere mittels Sprühverneblung der Zusammensetzung zur Ausbildung der Lack-basierten Beschichtung.

Der erfindungsgemäße Prozess wird vorzugsweise bei einer Temperatur von mindestens 45 °C, mehr bevorzugt mindestens 55 °C durchgeführt. Erhöhte Temperaturen der Formwerkzeug-Oberfläche fördern eine rasche Aushärtung der Zusammensetzung zur Ausbildung der Lack-basierten Beschichtung, z.B. durch eine erhöhte Verdunstung eines etwaig enthaltenen Lösungsmittels wie z.B. Wasser.

Vorzugsweise wird die Zusammensetzung zur Ausbildung der Lack-basierten Beschichtung automatisiert mittels eines Mehrachsenroboters in die offene Kavität des Formwerkzeugs eingesprüht. Ein Mehrachsenroboter bietet sehr flexible Gestaltungsmöglichkeiten bei der Herstellung der Beschichtung, so dass unterschiedliche geometrische Ausführungen detailliert ausgebildet werden können.

In einer alternativen Ausführungsvariante wird die Lack-basierte Zusammensetzung elektrostatisch in die offene Kavität des Formwerkzeugs eingesprüht. Hierbei wird die Lack-basierte Zusammensetzung bevorzugt pulverförmig bereitgestellt.

Eine Maskierung von Oberflächen des Formwerkzeugs beim Aufbringen der Zusammensetzung zur Ausbildung der Lack-basierten Beschichtung, die vorteilhaft ist, wenn nur Teilbereiche der Oberflächen gezielt beschichtet werden sollen, kann beispielsweise mittels mechanischer Masken erfolgen.

Alternativ hat es sich als besonders vorteilhaft erwiesen, wenn die Oberflächen des Formwerkzeugs in vorbestimmten Bereichen elektrostatisch aufgeladen werden, so dass praktisch ausschließlich diese Oberflächen von der pulverförmigen oder der vernebelten flüssigen Zusammensetzung zur Ausbildung der Lack-basierten Beschichtung bedeckt werden. Auf diese Weise kann der Materialverlust beim Aufbringen der Zusammensetzung auf den Oberflächen des Formwerkzeugs minimiert werden.

Gemäß einem anderen Aspekt betrifft die vorliegende Erfindung ein Verfahren zum Einbauen des erfindungsgemäßen Polyurethan-Formteils in einen Karosserie-Zwischenraum eines Kraftfahrzeugs, wobei das erfindungsgemäße Polyurethan-Formteils zunächst ausgerichtet und anschließend in seine bestimmungsgemäße Position in einen Karosserie-Hohl- bzw. Zwischenraum eines Kraftfahrzeugs eingeführt wird, der einen hierfür vorgesehenen Zugang aufweist. Beim Hindurchführen durch den Zugang gelangt das Formteil im Wesentlichen nur mit dem von der Lack-basierten Beschichtung ausgebildeten bzw. vermittelten reibungsmindernden Oberflächenbereich in Anlage an den Oberflächen das Zugangs.

Das Ausrichten des erfindungsgemäßen Polyurethan-Formteils erfolgt manuell oder automatisiert, vorzugsweise gemäß einem Mittel zur Lagekennzeichnung.

Nachfolgend wird die vorliegende Erfindung anhand von Figuren näher erläutert. Im Einzelnen zeigen:
- Fig. 1: eine schematische Darstellung eines ersten Ausführungsbeispiels des erfindungsgemäßen Formteils,
- Fig. 2: einen Ausschnitt eines zweiten Ausführungsbeispiels des erfindungsgemäßen Formteils,
- Fig. 3: einen Ausschnitt eins dritten Ausführungsbeispiels des erfindungsgemäßen Formteils,
- Fig. 4: einen Ausschnitt eines vierten Ausführungsbeispiels des erfindungsgemäßen Formteils, und
- Fig. 5: einen Ausschnitt eines fünften Ausführungsbeispiels des erfindungsgemäßen Formteils.

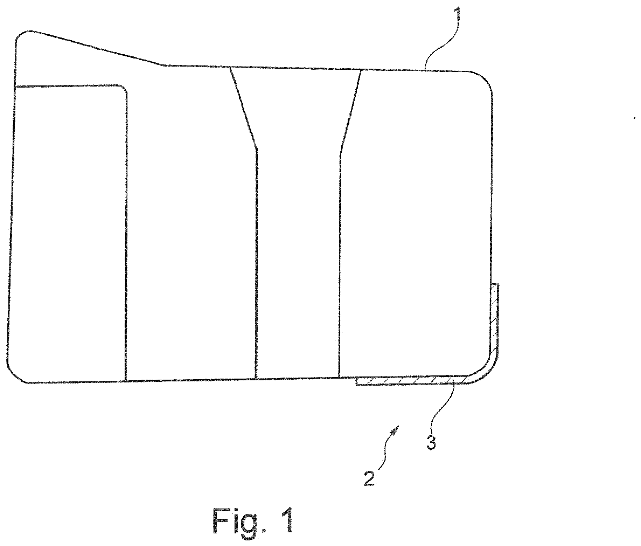

In Fig.1 ist ein erstes Ausführungsbeispiel des erfindungsgemäßen Polyurethan-Formteils 1 zum Einbau in einen Karosserie-Zwischenraum (nicht gezeigt) schematisch dargestellt. Das Polyurethan-Formteil 1 besteht aus einem formgeschäumten Polyurethanschaum mit einer typischen Dichte von 65-300 Kg/m³ und einer typischen Härte von 3-40 kPa nach ISO 3386-1 und weist eine integrierte Montagehilfe in Form einer Lack-basierten Beschichtung 2 auf. Diese ist auf einem Teilbereich der Oberfläche des Polyurethan-Formteils 1 angeordnet und weist eine reibungsmindernde Oberfläche 3 auf. Hierbei wird die reibungsmindernde Oberfläche 3 durch die Lack-basierte Beschichtung selbst gebildet, indem ein Lack mit niedrigem Reibungskoeffizienten verwendet wird. Insbesondere ist ein niedriger Reibungskoeffizient gegenüber der Oberfläche bzw. dem Material der Oberfläche vorteilhaft, auf der das Formteil beim Einführen an seinen Bestimmungsort gleiten soll.

Bevorzugt kommen aus Umweltschutz- und Gründen der Arbeitssicherheit wasserbasierte Lacksysteme zum Einsatz. Ggf. können aber auch lösungsmittelhaltige Lacksysteme vorteilhaft sein. Auch die Beigabe von reibungsmindernden Partikeln, z.B. aus PTFE, zum Lacksystem, kann vorteilhaft sein.

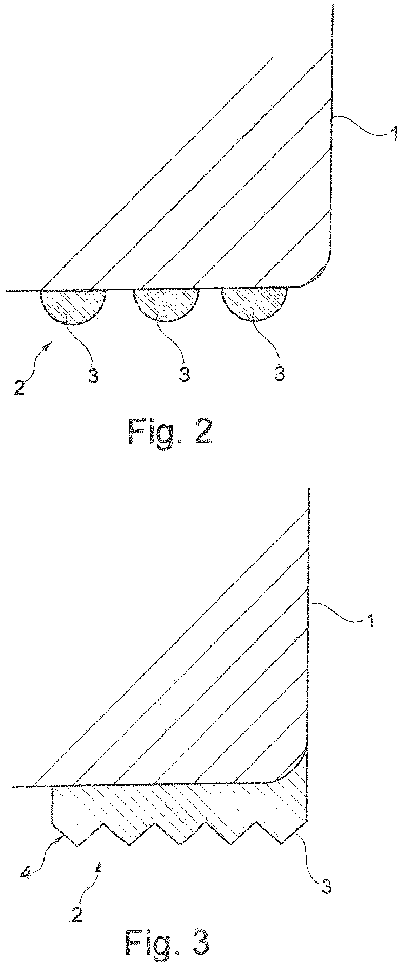

In Fig. 2 ist ein Ausschnitt eines zweiten Ausführungsbeispiels des erfindungsgemäßen Polyurethan-Formteils 1 dargestellt. Die Lack-basierte Beschichtung 2 ist in Form von einzelnen Noppen ausgeführt, die die reibungsmindernde Oberfläche 3 ausbilden. Die Geometrie der Noppen kann unterschiedlich ausgebildet sein. Beispielsweise können die Noppen linienförmig oder flächig angeordnet sein. Bei einer flächigen Anordnung sind mehrere Noppen in einem definierten Abstand zueinander angeordnet, wobei auch die konkrete Verteilung der Noppen bzw. deren Dichte variiert werden kann, um die Einführeigenschaften des Formteils 1 gezielt an die Gegebenheiten des Hohlraums bzw. dessen Zugangs anzupassen. Hierbei wird die reibungsmindernde Oberfläche 3 ebenfalls von der Lack-basierten Beschichtung 2 selbst ausgebildet, indem ein Lack mit bevorzugt niedrigen Reibungskoeffizienten verwendet wird, insbesondere basierend auf derselben Zusammensetzung wie der Lack im ersten Ausführungsbeispiel.

Fig. 3 zeigt einen Ausschnitt eines dritten Ausführungsbeispiels des erfindungsgemäßen Polyurethan-Formteils 1 mit einer Lack-basierten Beschichtung 2. Die Lack-basierte Beschichtung 2 weist eine strukturierte Oberfläche 4 in Form einer Zick-Zack-Struktur auf, die die reibungsmindernde Oberfläche 3 ausbildet. Durch die linienhafte Zick-Zack-Struktur wird die Größe der Oberfläche, die als Montagehilfe dient, reduziert. Dadurch, dass die reibungsmindernde Oberfläche 3 selbst einen niedrigen Reibungskoeffizienten aufweist, weist das Polyurethan-Formteil 1 gemäß des dritten Ausführungsbeispiels insgesamt hervorragende Gleiteigenschaften auf.

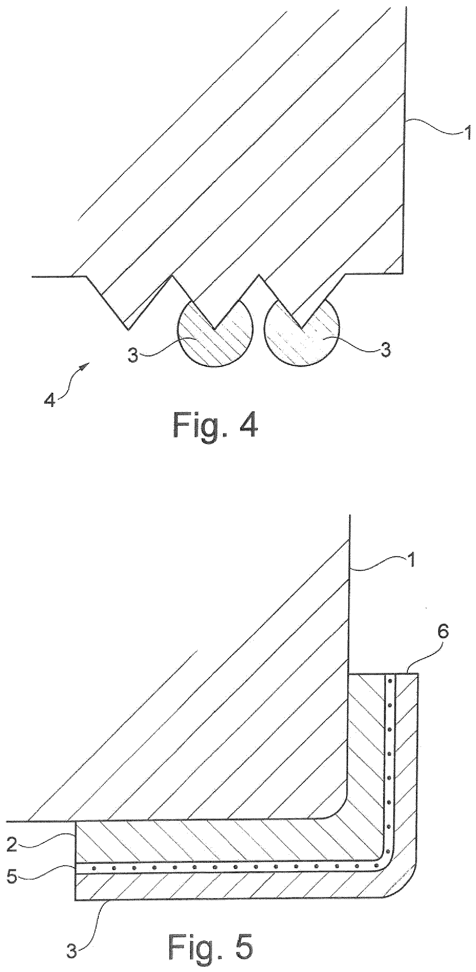

In einer alternativen Ausführungsvariante (Fig. 4) wird die strukturierte Oberfläche 4 durch das Polyurethan-Formteil 1 selbst gebildet. Vorzugsweise werden bei einer derartigen Ausführung nur die Zacken der Struktur 4 mit der Lack-basierten Beschichtung 2 versehen, die die reibungsmindernde Oberfläche 3 bildet.

In Fig. 5 ist ein Ausschnitt eines fünften Ausführungsbeispiels des erfindungsgemäßen Polyurethan-Formteils 1 dargestellt. In diesem Ausführungsbeispiel wird die reibungsmindernde Oberfläche 3 durch eine reibungsmindernde Schicht 6, beispielsweise eine Vliesschicht gebildet. Diese ist vorzugsweise mittels einer Klebeschicht 5 mit der Lack-basierten Beschichtung 2 verbunden.

Alternativ ist die Vliesschicht in die Lack-basierte Beschichtung zumindest teilweise eingebettet. Dies kann realisiert werden, indem eine geeignet dimensionierte Vliesschicht in die geöffnete Kavität des Formwerkzeugs eingelegt wird und nachfolgend mit der flüssigen oder pulvrigen Zusammensetzung zur Ausbildung der Lack-basierten Beschichtung besprüht wird. Nachfolgend wird die Reaktionsmischung aus Polyol und Isocyanat und ggf. Wasser zur Ausbildung des geschäumten Polyurethans in die Kavität eingebracht und diese zur Ausbildung des Formteils geschlossen.

## Patentansprüche

1. Polyurethan-Formteil (1) mit integrierter Montagehilfe zum Einbau in Karosserie-Zwischenräume eines Kraftfahrzeugs, wobei das Polyurethan-Formteil (1) aus formgeschäumten Polyurethanschaum mit einer typischen Dichte von 65-300 Kg/m³ und einer typischen Härte von 3-40 kPa nach ISO 3386-1 gebildet ist, aufweisend eine mit dem Polyurethan-Formteil (1) stoffschlüssig verbundene Lack-basierte Beschichtung aufweisend einen reibungsmindernden Oberflächenbereich (3), die auf einem Teilbereich der Oberfläche des Polyurethan-Formteils (1) angeordnet ist und eine Schichtdicke im Bereich von 30 bis 150 µm aufweist, wobei der reibungsmindernde Oberflächenbereich (3) die Funktion der Montagehilfe übernimmt.

2. Polyurethan-Formteil (1) nach Anspruch 1, wobei die Lack-basierte Beschichtung (2) maximal 50 %, mehr bevorzugt maximal 30 % der gesamten Oberfläche des Polyurethan-Formteils (1) einnimmt.

3. Polyurethan-Formteil (1) nach Anspruch 1 oder 2, wobei eine weitere Lack-basierte Beschichtung (2) vorgesehen ist, die einen reibungserhöhten Oberflächenbereich (4) aufweist.

4. Polyurethan-Formteil (1) nach einem der vorhergehenden Ansprüche, wobei die Lack-basierte Beschichtung (2) Mittel zur Lagekennzeichnung aufweist.

5. Polyurethan-Formteil (1) nach einem der vorhergehenden Ansprüche, wobei die Lack-basierte Beschichtung (2), insbesondere der reibungsmindernde oder/und der reibungserhöhte Oberflächenbereich (4), eine ebene oder eine strukturierte Oberfläche aufweist.

6. Polyurethan-Formteil (1) nach einem der vorhergehenden Ansprüche, wobei der reibungsmindernde oder/und der reibungserhöhte Oberflächenbereich (3), (4) durch die Lack-basierte Beschichtung (2) oder eine reibungsmindernde bzw. reibungserhöhende Schicht gebildet wird.

7. Verfahren zur Herstellung eines Polyurethan-Formteils (1) nach einem der Ansprüche 1 bis 6, die folgenden Schritte aufweisend:
i) Aufbringen einer Zusammensetzung zur Ausbildung der Lack-basierten Beschichtung (2) auf zumindest einem Teilbereich einer offenen Kavität eines Formwerkzeugs, und
ii) Hinterschäumen des Formwerkzeugs mit Polyurethan.

8. Verfahren nach Anspruch 7, wobei vor dem Schritt i) ein Trennmittel in die offene Kavität aufgebracht wird.

9. Verfahren nach Anspruch 7 oder 8, wobei der Prozess bei einer Temperatur von mindestens 45 °C, mehr bevorzugt mindestens 55 °C durchgeführt wird.

10. Verfahren nach einem der vorhergehenden Ansprüche 7 bis 9, wobei die Lack-basierte Zusammensetzung mittels eines Mehrachsenroboters in die offene Kavität des Formwerkzeugs eingesprüht wird.

11. Verfahren nach einem der vorhergehenden Ansprüche 7 bis 10, wobei die Lack-basierte Zusammensetzung elektrostatisch in die offene Kavität des Formwerkzeugs eingesprüht wird.

12. Verfahren nach Anspruch 7, wobei bei der Herstellung des Polyurethan-Formteils (1) ein Mittel zur Lagekennzeichnung in das ein- oder auf dem Formteil (1) angebracht wird.

13. Verfahren zum Einbauen eines Polyurethan-Formteils (1) in einen Karosserie-Zwischenraum eines Kraftfahrzeugs, der einen Zugang aufweist, enthaltend die Schritte:
- Bereitstellen eines Polyurethan-Formteils (1) nach einem der Ansprüche 1 bis 6,
- Ausrichten des Polyurethan-Formteils (1), und
- Einsetzen des Polyurethan-Formteils (1) in den Karosserie-Zwischenraum, wobei das Polyurethan-Formteil (1) durch den Zugang in den Zwischenraum eingeführt wird, wobei das Formteil im Wesentlichen nur mit dem von der Lack-basierten Beschichtung (2) ausgebildeten bzw. vermittelten reibungsmindernden Oberflächenbereich (3) in Anlage an den Oberflächen das Zugangs gelangt.

14. Verfahren nach Anspruch 13, wobei das Ausrichten des Polyurethan-Formteils (1) gemäß dem Mittel zur Lagekennzeichnung erfolgt.

## Claims

1. A polyurethane molded part (1) having an integrated mounting aid for installation in intermediate spaces of a body of a motor vehicle, wherein the polyurethane molded part (1) is made of foam-molded polyurethane foam having a typical density of 65-300 Kg/m³ and a typical hardness of 3-40 kPa according to ISO 3386-1, comprising a lacquer-based coating that is integrally bonded to the polyurethane molded part (1) and has a friction-reducing surface region (3) and that is arranged on a partial region of the surface of the polyurethane molded part (1) and has a layer thickness in the range of 30 to 150 µm, wherein the friction-reducing surface region (3) assumes the function of the mounting aid.

2. The polyurethane molded part (1) according to claim 1, wherein the lacquer-based coating (2) accounts for no more than 50%, and more preferably no more than 30% of the entire surface of the polyurethane molded part (1).

3. The polyurethane molded part (1) according to claim 1 or 2, wherein a further lacquer-based coating (2) is provided, which comprises a friction-increased surface region (4).

4. The polyurethane molded part (1) according to any one of the preceding claims, wherein the lacquer-based coating (2) comprises means for position identification.

5. The polyurethane molded part (1) according to any one of the preceding claims, wherein the lacquer-based coating (2), and in particular the friction-reducing and/or the friction-increased surface region (4), has a planar or a structured surface.

6. The polyurethane molded part (1) according to any one of the preceding claims, wherein the friction-reducing and/or the friction-increased surface region (3), (4) is formed by the lacquer-based coating (2) or a friction-reducing or friction-increasing layer.

7. A method for producing a polyurethane molded part (1) according to any one of claims 1 to 6, comprising the following steps:
i) applying a composition for creating the lacquer-based coating (2) to at least one partial region of an open cavity of a mold; and
ii) back-foaming the mold with polyurethane.

8. The method according to claim 7, wherein a release agent is applied into the open cavity prior to step i).

9. The method according to claim 7 or 8, wherein the process is carried out at a temperature of at least 45°C, and more preferably of at least 55°C.

10. The method according to any one of the preceding claims 7 to 9, wherein the lacquer-based composition is sprayed into the open cavity of the mold using a multi-axis robot.

11. The method according to any one of the preceding claims 7 to 10, wherein the lacquer-based composition is electrostatically sprayed into the open cavity of the mold.

12. The method according to claim 7, wherein a means for position identification is introduced into or attached to the molded part (1) during the production of the polyurethane molded part (1).

13. A method for installing a polyurethane molded part (1) into an intermediate space of a body of a motor vehicle which has an access, comprising the following steps:
- providing a polyurethane molded part (1) according to any one of claims 1 to 6;
- aligning the polyurethane molded part (1); and
- inserting the polyurethane molded part (1) into the intermediate space of a body, wherein the polyurethane molded part (1) is introduced into the intermediate space through the access, wherein the molded part essentially only makes contact with the friction-reducing surface region (3) that is created or facilitated by the lacquer-based coating (2) at the surfaces of the access.

14. The method according to claim 13, wherein the alignment of the polyurethane molded part (1) takes place in accordance with the means for position identification.

## Revendications

1. Pièce moulée en polyuréthane (1) présentant un auxiliaire de montage intégré pour installation dans des espaces intermédiaires de la carrosserie d'un véhicule à moteur, dans laquelle la pièce moulée en polyuréthane (1) est fabriquée en une mousse de polyuréthane moulée en expansion présente une masse volumique typique de 65 à 300 kg/m³ et une dureté typique de 3 à 40 kPa conformément à ISO 3386-1, comprenant un revêtement à base de laque qui adhère de manière intégrale à la pièce moulée en polyuréthane (1) et présente une région de surface réduisant les frottements (3) et qui est agencé sur une région partielle de la surface de la pièce moulée en polyuréthane (1) et présente une épaisseur de couche dans la plage de 30 à 150 µm, dans laquelle la région de surface réduisant les frottements (3) endosse la fonction de l'auxiliaire de montage.

2. Pièce moulée en polyuréthane (1) selon la revendication 1, dans laquelle le revêtement à base de laque (2) ne représente pas plus de 50 %, et plus préférentiellement pas plus de 30 % de la surface entière de la pièce moulée en polyuréthane (1).

3. Pièce moulée en polyuréthane (1) selon la revendication 1 ou 2, dans laquelle un revêtement à base de laque (2) supplémentaire est fourni, lequel revêtement comprend une région de surface à frottements augmentés (4).

4. Pièce moulée en polyuréthane (1) selon l'une quelconque des revendications précédentes, dans laquelle le revêtement à base de laque (2) comprend un moyen d'identification de position.

5. Pièce moulée en polyuréthane (1) selon l'une quelconque des revendications précédentes, dans laquelle le revêtement à base de laque (2), et en particulier la région de surface réduisant les frottements et/ou à frottements augmentés (4), présente une surface plane ou structurée.

6. Pièce moulée en polyuréthane (1) selon l'une quelconque des revendications précédentes, dans laquelle la région de surface réduisant les frottements et/ou à frottements augmentés (3), (4) est formée par le revêtement à base de laque (2) ou une couche réduisant les frottements ou augmentant les frottements.

7. Procédé de production d'une pièce moulée en polyuréthane (1) selon l'une quelconque des revendications 1 à 6, comprenant les étapes suivantes :
i) appliquer une composition pour créer le revêtement à base de laque (2) à au moins une région partielle d'une cavité ouverte d'un moule ; et
ii) appliquer en revers de la mousse sur le moule avec du polyuréthane.

8. Procédé selon la revendication 7, dans lequel un agent de démoulage est appliqué dans la cavité ouverte avant l'étape i).

9. Procédé selon la revendication 7 ou 8, dans lequel le procédé est mis en œuvre une température d'au moins 45 °C, et plus préférentiellement d'au moins 55 °C.

10. Procédé selon l'une quelconque des revendications 7 à 9 précédentes, dans lequel la composition à base de laque est pulvérisée dans la cavité ouverte du moule en utilisant un robot multi-axes.

11. Procédé selon l'une quelconque des revendications 7 à 10 précédentes, dans lequel la composition à base de laque est pulvérisée de manière électrostatique dans la cavité ouverte du moule.

12. Procédé selon la revendication 7, dans lequel un moyen d'identification de position est introduit dans ou attaché à la pièce moulée (1) pendant la production de la pièce moulée en polyuréthane (1).

13. Procédé d'installation d'une pièce moulée en polyuréthane (1) dans un espace intermédiaire d'une carrosserie d'un véhicule à moteur qui présente un accès, comprenant les étapes suivantes :
- fournir une pièce moulée en polyuréthane (1) selon l'une quelconque des revendications 1 à 6 ;
- aligner la pièce moulée en polyuréthane (1) ; et
- insérer la pièce moulée en polyuréthane (1) dans l'espace intermédiaire d'un corps, dans lequel la pièce moulée en polyuréthane (1) est introduite dans l'espace intermédiaire à travers l'accès, dans lequel la pièce moulée entre essentiellement uniquement en contact avec la région de surface réduisant les frottements (3) qui est créée ou facilitée par le revêtement à base de laque (2) au niveau des surfaces de l'accès.

14. Procédé selon la revendication 13, dans lequel l'alignement de la pièce moulée en polyuréthane (1) se déroule conformément au moyen d'identification de position.
